# EUROPÄISCHE PATENTSCHRIFT

(11) **EP 3 533 132 B1**
(45) Veröffentlichungstag und Bekanntmachung des Hinweises auf die Patenterteilung: **13.05.2020**
(21) Anmeldenummer: 17788176.0
(22) Anmeldetag: 12.10.2017
(51) Int. Cl.: H02K 3/52, H02K 3/32

(54) **WICKELSTÜTZE UND STATOR**
ROLL SUPPORT AND STATOR
SUPPORT D'ENROULEMENT ET STATOR

(30) Priorität: 25.10.2016 EP 16195417
(43) Veröffentlichungstag der Anmeldung: 04.09.2019
(73) Patentinhaber: Hilti Aktiengesellschaft, 9494 Schaan (LI)
(72) Erfinder: TUSSING, Torsten, 86899 Landsberg am Lech (DE); BURGER, Helmut, 86944 Unterdießen (DE); LUDWIG, Wolfgang, 86874 Zaisertshofen (DE)
(74) Vertreter: Hilti Aktiengesellschaft Corporate Intellectual Property
(86) Internationale Anmeldenummer: PCT/EP2017/076007
(87) Internationale Veröffentlichungsnummer: WO 2018/077625

(56) Entgegenhaltungen:
- WO-A1-2012/090424
- WO-A2-2009/019562
- US-A1- 2004 245 882
- US-A1- 2015 338 243

## Beschreibung

Die vorliegende Erfindung betrifft eine Wickelstütze zum zumindest teilweisen Aufnehmen einer Statorspule eines Stators. Die Wickelstütze weist eine Mehrzahl von Stegen auf, die jeweils in einen Zwischenraum, der durch zwei benachbarte Statorpolzähne eines Blechpakets des Stators gebildet ist, in einer Einschubrichtung einzuschieben sind.

Aus dem Stand der Technik bekannt sind beispielsweise Wickelstützen, deren Stege ringförmig miteinander verbunden sind und die aus einem elektrisch isolierenden Kunststoff bestehen um Blechpaket und Statorspulen elektrisch voneinander zu isolieren. Ein Stator des Standes der Technik weist typischerweise zwei Wickelstützen auf, die an gegenüberliegenden Seiten des Blechpakets in das Blechpaket eingeschoben sind und gemeinsam eine Statorspule aufnehmen. In einer konstruktiven Minimallösung erstecken sich die Wickelstützen nur ein vergleichsweise kurzes Stück in das Blechpaket hinein, wobei eine elektrische Isolation dadurch gewährleistet wird, dass ein Luftspalt zwischen Statorspule und Statorpolzahn verbleibt. In vielen Fällen aber isolieren die eingeschobenen Wickelstützen das Blechpaket über dessen gesamte Länge, wobei jede der Wickelstützen etwa eine halbe Blechpaketlänge abdeckt. In der Mitte des Blechpakets bleibt ein typischerweise ein Spalt, um die Längentoleranz des Blechpakets auszugleichen.

Aus der US 2015/338243 A1 ist eine Wickelstütze bekannt, deren Stege ringförmig miteinander verbunden sind.

Es ist Aufgabe der vorliegenden Erfindung eine Wickelstütze zu schaffen, die die Grundlage für einen besonders einfach handzuhabenden Stator bildet.

Diese Aufgabe wird durch eine Wickelstütze gemäß Anspruch 1 gelöst.

Die Erfindung schließt die Erkenntnis ein, dass das Blechpaket eines Stators aus einer Vielzahl von Einzelblechen (Einzelblechdicke typsicherweise zwischen 0,35 und 0,5 mm) aufgebaut ist, die durch Paketierpunkte zusammen gehalten werden. Diese müssen das Blechpaket hauptsächlich während der Montage vom Stanzpaketieren bis zum Wickeln zusammen halten. Danach wird das Blechpaket durch die Statorwicklung stabilisiert. Sofern die Paketierpunkte zu schwach sind, kann das Blechpaket während des Transports oder beim Einlegen in die Wickelvorrichtung auseinander brechen. Dies tritt in der Praxis häufiger auf, da Blechpakete typischerweise nicht am Ort der Statormontage gefertigt werden und demnach teilweise lange Transportwege haben.

Dabei wurde erkannt, dass der bei Statoren des Standes der Technik zwischen den Wickelstützen verbleibende, durchgehend umlaufende Ausgleichsspalt eine unerwünschte Sollbruchstelle bildet. Durch den schichtweisen Aufbau des Blechpakets kann es also im Bereich des Spalts zum Bruch kommen.

In Abkehr dazu sind bei dem erfindungsgemäßen Stator ein längerer Steg der ersten Wickelstütze und ein kürzerer Steg der zweiten Wickelstütze im gleichen Zwischenraum des Blechpakets befindlich, wodurch ein durchgehend umlaufender Ausgleichsspalt vermieden werden kann. Dies vermindert bzw. vermeidet die Gefahr von Brüchen, wodurch der erfindungsgemäße Stator besonders einfach handzuhaben ist. Dabei bleibt sowohl der Vorteil der elektrischen Isolation zwischen Blechpaket und Statorspule als auch der Vorteil eines Spalts zum Ausgleich einer Längentoleranz des Blechpakets erhalten.

In einer besonders bevorzugten Ausgestaltung der Wickelstütze ist eine gerade Anzahl von Stegen vorgesehen. Vorzugsweise weist die Wickelstütze genau sechs Stege auf. Es hat sich als vorteilhaft herausgestellt, wenn die Wickelstütze aus einem elektrisch isolierenden Kunststoff besteht. Vorzugsweise sind die Stege ringförmig miteinander verbunden.

Erfindungsgemäß weisen wenigstens zwei, vorzugsweise drei benachbarte Stege die gleiche Länge auf. Sind beispielsweise genau sechs Stege vorgesehen, wobei drei benachbarte Stege die gleiche Länge aufweisen, so können diese drei benachbarten Stege einen Halbkreis mit langen Stegen bilden. Respektive können drei benachbarte Stege mit gleicher, kürzerer Länge einen Halbkreis mit kurzen Stegen bilden. Es hat sich als vorteilhaft herausgestellt, wenn ein längerer Steg wenigstens 20 Prozent länger ist als ein kürzerer Steg.

Weitere Vorteile ergeben sich aus der folgenden Figurenbeschreibung. In den Figuren sind verschiedene Beispiele dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: einen Stator des Standes der Technik;
- Fig. 2: einen weiteren Stator des Standes der Technik mit Statorspulen;
- Fig. 3: ein Beispiel einer Wickelstütze;
- Fig. 4A: die Wickelstütze aus Fig. 3 mit einer dazu komplementären (zweiten) Wickelstütze;
- Fig. 4B: eine Teilansicht zweier komplementärer Wickelstützen;
- Fig. 5: ein Stator mit den Wickelstützen der Fig. 4A ausgestattet mit Statorspulen; und
- Fig. 6: eine Handwerkzeugmaschine mit Elektromotor und Stator.

### Stand der Technik:

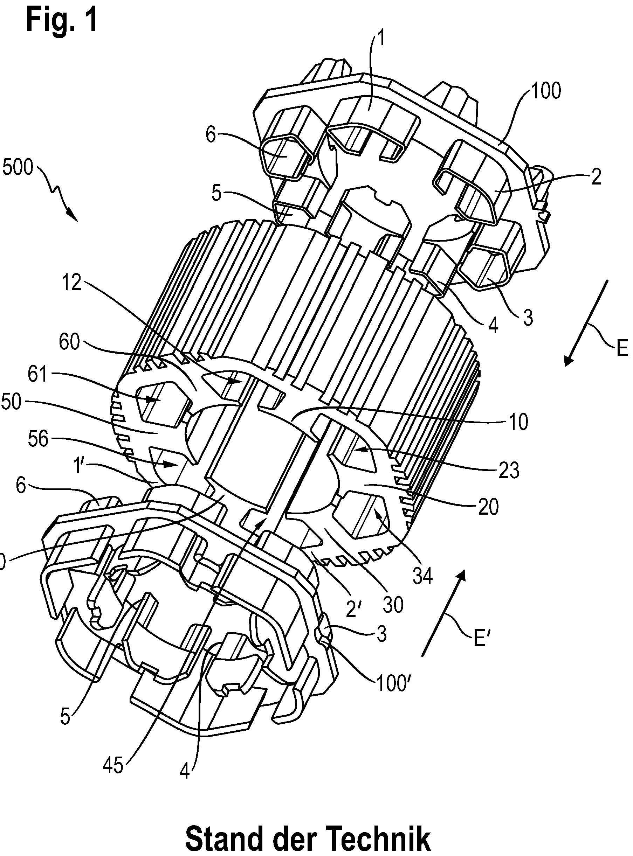

Fig. 1 zeigt einen Stator 500 des Standes der Technik. Der Stator 500 weist ein Blechpaket 400 mit sechs Statorpolzähnen 10, 20, 30, 40, 50, 60 auf, von denen jeweils zwei benachbarte einen Zwischenraum 12, 23, 34, 45, 56, 61 bilden.

Der Stator 500 verfügt ebenfalls über eine erste Wickelstütze 100 und eine zweite Wickelstütze 100'. Die Wickelstützen 100, 100' sind nicht in das Blechpaket 400 eingeschoben.

Die erste Wickelstütze 100 weist sechs Stege 1, 2, 3, 4, 5, 6 auf, die jeweils in den entsprechenden Zwischenraum 12, 23, 34, 45, 56, 61 des Blechpakets 400 des Stators 500 in einer Einschubrichtung E einzuschieben sind. Die zweite Wickelstütze 100 weist ebenfalls sechs Stege 1', 2', 3', 4', 5', 6' auf, die jeweils in den entsprechenden Zwischenraum 12, 23, 34, 45, 56, 61 des Blechpakets 400 des Stators 500 in einer Einschubrichtung E' einzuschieben sind.

Die sechs Stege 1, 2, 3, 4, 5, 6 der ersten Wickelstütze 100 und die sechs Stege 1', 2', 3', 4', 5', 6' der zweiten Wickelstütze 100 weisen, bezogen auf ihre jeweilige Einschubrichtung E, E', jeweils identische Längen auf.

Fig. 1 zeigt eine konstruktive Minimallösung der Wickelstützen 100, 100' bei der sich die Stege 1, 2, 3, 4, 5, 6; 1', 2', 3', 4', 5', 6' nur ein kurzes Stück in das Blechpaket 400 hinein erstrecken, d.h. im Wesentlichen im Bereich eines Wickelkopfs K, K' am Anfang bzw. Ende des Blechpakets 400.

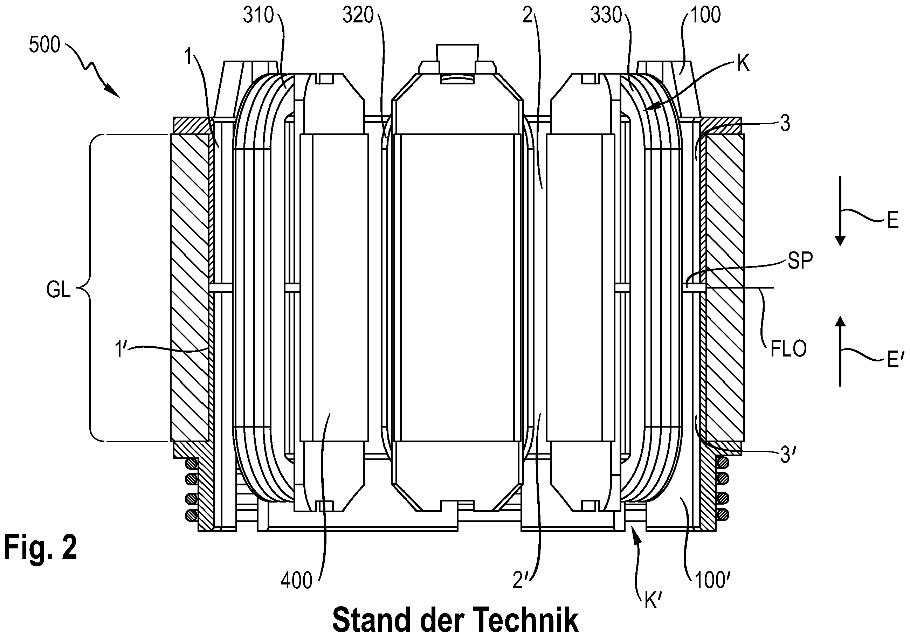

Fig. 2 zeigt einen weiteren Stator 500 des Standes der Technik. Aus Gründen der Deutlichkeit wurde eine Schnittdarstellung gewählt, in der drei (von sechs) Statorspulen 310, 320, 330 erkennbar sind. Das Blechpaket 400 ist mit dem in Fig. 1 dargestellten Blechpaket 400 identisch.

Die in das Blechpaket 400 eingeschobenen Wickelstützen 100, 100' isolieren das Blechpaket 400 über dessen gesamte Blechpaketlänge GL, wobei jede der Wickelstützen 100, 100' etwa eine halbe Blechpaketlänge GL abdeckt. In der Mitte des Blechpakets 400 bleibt ein Spalt SP, um die Längentoleranz des Blechpakets 400 auszugleichen.

Der bei dem Stator 400 des Standes der Technik in Fig. 2 zwischen den Wickelstützen 100, 100' verbleibende und durchgehend umlaufende Ausgleichsspalt SP, bildet eine unerwünschte Sollbruchstelle. Mit anderen Worten, existiert wenigstens eine Fläche FL0, die normal zur Einschubrichtung E, E' orientiert ist und innerhalb der Gesamtlänge GL des Blechpakets 400 liegt und die keinen der Stege 1, 2, 3, 4, 5, 6; 1', 2', 3', 4', 5', 6' schneidet.

### Beispiele:

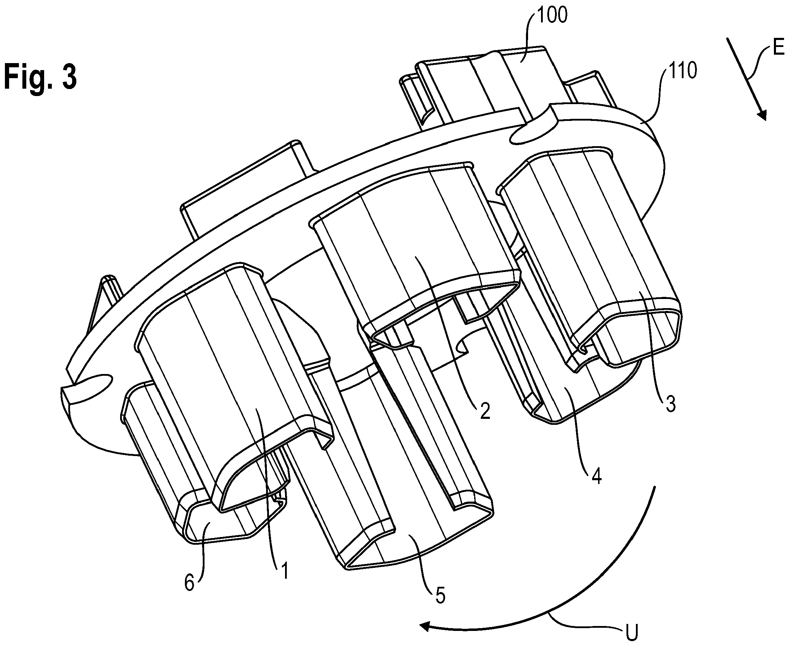

Fig. 3 zeigt ein Beispiel einer Wickelstütze 100.

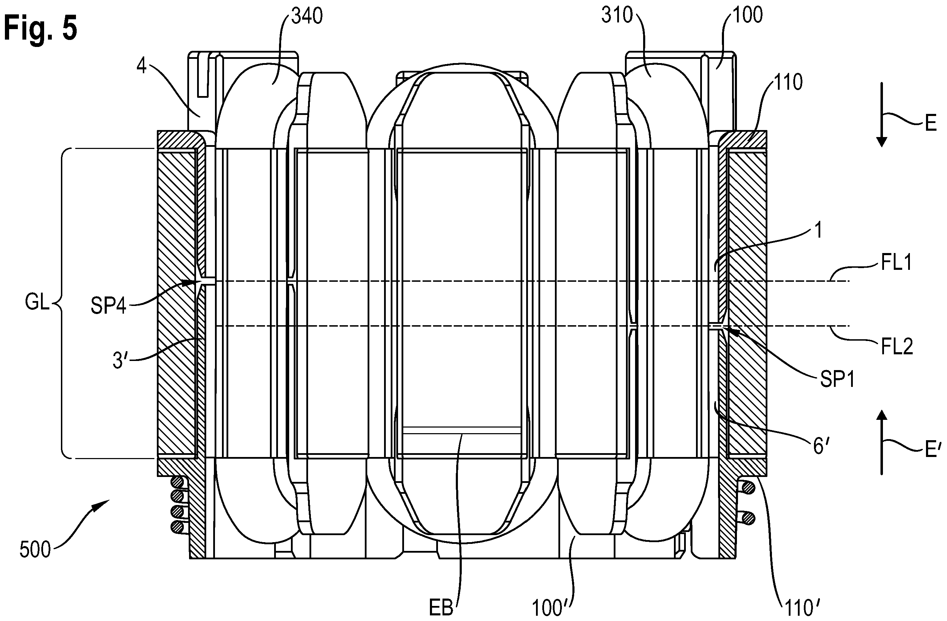

Die Wickelstütze 100 ist zum zumindest teilweisen Aufnehmen einer Statorspule 300, 320, 330 (vgl. Fig. 5) eines Stators 500 ausgebildet.

Die Wickelstütze 100 weist genau sechs Stege 1, 2, 3, 4, 5, 6 auf. Die Stege 1, 2, 3, 4, 5, 6 sind jeweils in einen Zwischenraum 12, 23, 34, 45, 56, 61 (vgl. Fig. 1) der durch zwei benachbarte Statorpolzähne 60, 10; 10, 20; 20, 30; 30, 40; 40, 50; 50, 60 eines Blechpakets 400 eines Stators 500 gebildet ist (vgl. Fig. 1) in einer Einschubrichtung E einzuschieben.

Im in Fig. 3 gezeigten Beispiel weisen genau drei der Stege 1, 3, 5 in Einschubrichtung E eine andere, nämlich größere Länge auf, als die verbleibenden anderen Stege 2, 4, 6. Dabei weisen zwei unmittelbar benachbarte Stege 1, 2; 2, 3; 3, 4; 4, 5; 5, 6; 6, 1 jeweils eine unterschiedliche Länge auf. Mit anderen Worten sind entlang eines Umfangs U der Wickelstütze 100 abwechselnd ein kurzer 2, 4, 6 und ein langer Steg 1, 3, 5 verteilt.

Die Wickelstütze 100 besteht aus einem elektrisch isolierenden Kunststoff und die Stege 1, 2, 3, 4, 5, 6 sind ringförmig, im vorliegend dargestellten Beispiel über einen jeweiligen Verbindungsring 110, miteinander verbunden.

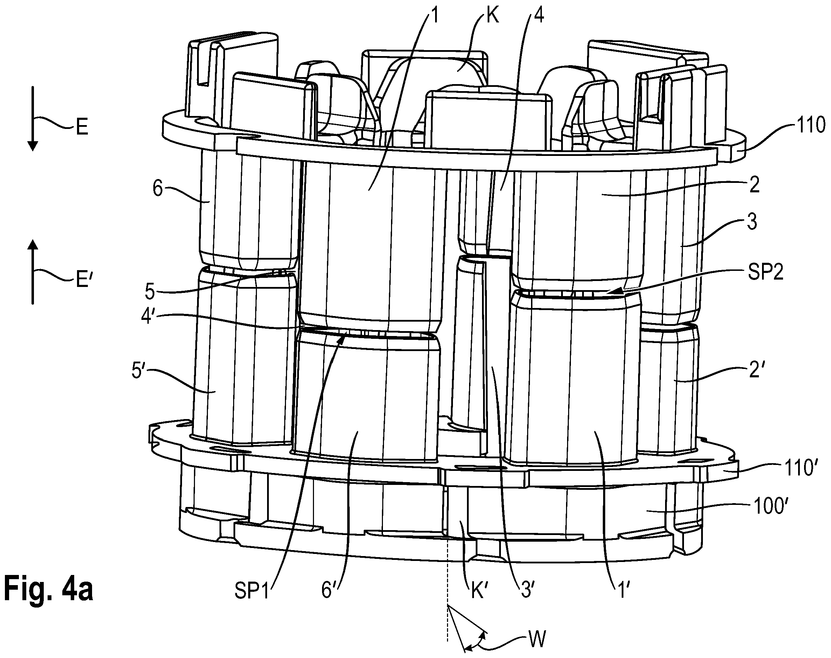

Fig. 4A zeigt nunmehr die Wickelstütze 100 aus Fig. 3 mit einer dazu komplementären zweiten Wickelstütze 100' (unten in der Fig. 4A).

Die erste Wickelstütze 100 und die zweite Wickelstütze 100' sind - insoweit es die Stege 1, 2, 3, 4, 5, 6; 1', 2', 3', 4', 5', 6' betrifft - identisch ausgebildet. Die Wickelstützen 100, 100' sind vorliegend um einen Winkel W zueinander verdreht, wobei der Winkel 60 Grad beträgt, da Wickelstützen 100, 100' für ein Blechpaket mit genau sechs Statorpolzähnen 10, 20, 30, 40, 50, 60 (vgl. Fig. 1) ausgebildet ist.

Die Stege 1, 2, 3, 4, 5, 6; 1', 2', 3', 4', 5', 6' wären - ausgehend von der Darstellung der Fig. 4A - derart, die Zwischenräume eingeschoben, dass ein längerer Steg 1 der ersten Wickelstütze 100 und ein kürzerer Steg 6' der zweiten Wickelstütze 100' im gleichen Zwischenraum 12 befindlich sind.

Es sei darauf hingewiesen, dass erste und zweite Wickelstütze 100, 100' vorliegend konstruktive Unterschiede im Bereich der Wickelköpfe K, K' und konstruktive Unterschiede auf ihren jeweiligen dem Blechpaket (nicht dargestellt) abgewandten Seiten der Verbindungsringe 110, 110' aufweisen.

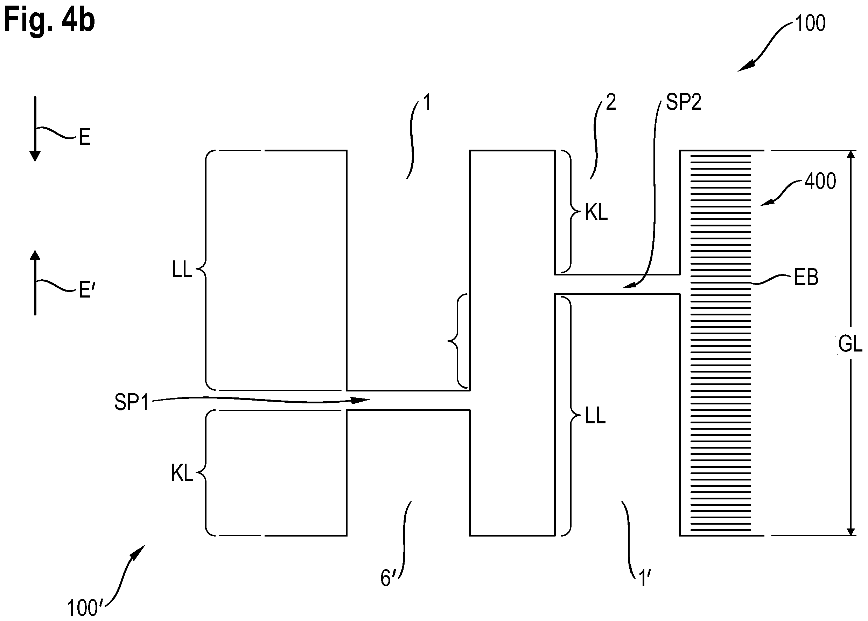

Mit Bezug auf Fig. 4B soll im Folgenden beispielhaft eine Überlappung von Stegen erläutert werden. Dazu zeigt Fig. 4B eine Teilansicht zweier komplementärer Wickelstützen 100, 100'.

Der längere Steg 1 der ersten Wickelstütze 100 und der kürzere Steg 6' der zweiten Wickelstütze 100' ergänzen sich, bei vollständig in das Blechpaket 400 eingeschobenen Wickelstützen 100, 100' (dies ist in Fig. 4B dargestellt), in ihrer Länge zur Gesamtlänge GL des Blechpakets 400 abzüglich eines Luftspalts SP1 (LL + KL = GL - SP1).

Gleichermaßen ergänzen sich der kürzere Steg 2 der ersten Wickelstütze 100 und der längere Steg 1' der zweiten Wickelstütze 100' in ihrer Länge zur Gesamtlänge GL des Blechpakets 400 abzüglich eines Luftspalts SP2 (LL + KL = GL - SP2). Die Luftspalte SP1, SP2 weisen, bezogen auf die Einschubrichtung E, E' die gleiche Länge auf.

Exemplarisch weisen, bei einer Gesamtlänge GL des Blechpakets 400 von 27 mm, die langen Stege 1, 1' eine Länge LL von 15 mm und die kurzen Stege 2, 6' eine Länge KL von 11 mm auf. Die Luftspalte SP1, SP1 sind jeweils 1 mm lang. Die Stege 1, 2 der ersten Wickelstütze 100 und die korrespondierenden Stege 6', 1'der zweiten Wickelstütze 100' überlappen sich, bezogen auf die Einschubrichtung E, E' in einem Überlappungsbereich UB, der exemplarisch somit 3 mm breit ist. Der Überlappungsbereich UB ist auch wenigstens 5-mal so groß, wie eine Einzelblechdicke EB des Blechpakets 400, die exemplarisch 0,35 mm beträgt.

Fig. 5 zeigt einen Stator 500 mit einem Blechpaket 400 in das die Wickelstützen 100, 100' der Fig. 4A bestimmungsgemäß eingeschoben sind. Aus Gründen der Deutlichkeit wurde eine Schnittdarstellung gewählt, in der zwei (von sechs) Statorspulen 310, 340 bezeichnet sind. Das Blechpaket 400 ist mit dem in Fig. 1 dargestellten Blechpaket 400 identisch.

Wie der Fig. 5 entnommen werden kann existiert keine Fläche, die normal zur Einschubrichtung E, E' orientiert ist und innerhalb der Gesamtlänge GL des Blechpakets liegt, die nicht zumindest einen der Stege 1, 3' schneidet. So verläuft beispielsweise eine erste Fläche FL1 schnittfrei durch einen ersten Luftspalt SP1, der zwischen zwei korrespondierenden Stegen 1, 6' befindlich ist. Allerdings schneidet gerade diese erste Fläche einen anderen Steg 4 der ersten Wickelstütze 100.

Somit schneidet jede Fläche - hier beispielhaft die Flächen FL1, FL2 - die normal zur Einschubrichtung E orientiert ist und innerhalb der Gesamtlänge GL des Blechpakets liegt, wenigstens einen der Stege 1, 3'.

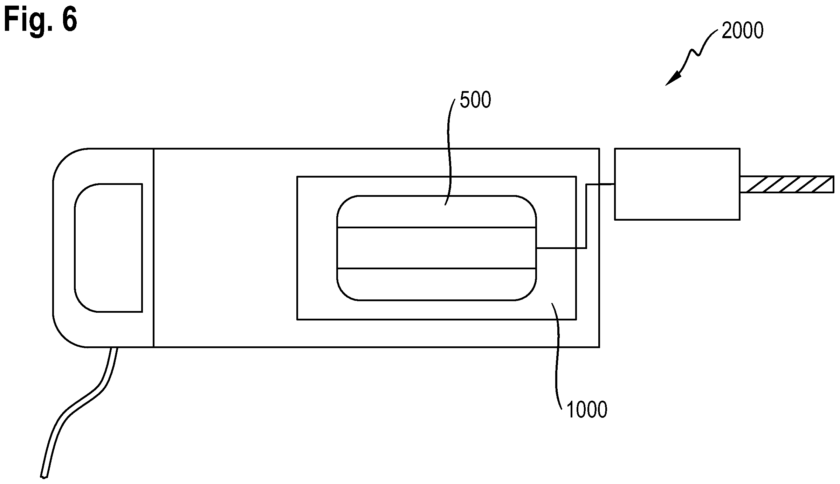

Fig. 6 zeigt schließlich eine Handwerkzeugmaschine 2000 mit Elektromotor 1000 in dem, schematisch dargestellt, ein erfindungsgemäßer Stator 500 verbaut ist.

### Bezugszebichenliste

- 100, 100': erste, zweite Wickelstütze
- 110, 110': Verbindungsring
- 1, 2, 3, 4, 5, 6: Stege der ersten Wickelstütze
- 1', 2', 3', 4', 5', 6': Stege der zweiten Wickelstütze
- 10, 20, 30, 40, 50, 60: Statorpolzähne
- 12, 23, 34, 45, 56, 61: Zwischenraum
- 300, 310, 320, 330, 340: Statorspule
- 400: Blechpaket
- 500: Stator
- 1000: Elektromotor
- 2000: Handwerkzeugmaschine
- E, E': Einschubrichtung
- EB: Einzelblechdicke
- FL0, FL1, FL2: Flächen
- GL: Gesamtlänge des Blechpakets
- K, K': Wickelkopf
- SP, SP1, SP2, SP4: Luftspalte
- U: Umfang
- UB: Überlappungsbereich
- W: Winkel

## Patentansprüche

1. Wickelstütze (100) zum zumindest teilweisen Aufnehmen einer Statorspule (300, 320, 330) eines Stators (500), wobei die Wickelstütze (100) eine Mehrzahl von Stegen (1, 2, 3, 4, 5, 6) aufweist, die jeweils in einen Zwischenraum (12, 23, 34, 45, 56, 61), der durch zwei benachbarte Statorpolzähne (60, 10; 10, 20; 20, 30; 30, 40; 40, 50; 50, 60) eines Blechpakets (400) des Stators (500) gebildet ist, in einer Einschubrichtung (E) einzuschieben sind, wobei wenigstens einer der Stege (1, 3, 5) in Einschubrichtung (E) eine andere Länge aufweist, als wenigstens einer der anderen Stege (2, 4, 6),
**dadurch gekennzeichnet, dass** wenigstens zwei, vorzugsweise drei benachbarte Stege die gleiche Länge aufweisen.

2. Wickelstütze (100) nach Anspruch 1,
**dadurch gekennzeichnet, dass** die Wickelstütze (100) aus einem elektrisch isolierenden Kunststoff besteht und die Stege (1, 2, 3, 4, 5, 6) ringförmig miteinander verbunden sind.

## Claims

1. Winding support (100) for at least partially receiving a stator coil (300, 320, 330) of a stator (500), the winding support (100) having a plurality of protrusions (1, 2, 3, 4, 5, 6), which can each be inserted in a direction of insertion (E) into an intermediate space (12, 23, 34, 45, 56, 61), which is formed by two adjacent stator pole teeth (60, 10; 10, 20; 20, 30; 30, 40; 40, 50; 50, 60) of a laminated core (400) of the stator (500), at least one of the protrusions (1 3, 5) having a different length in the direction of insertion (E) than at least one of the other protrusions (2, 4, 6), **characterized in that** at least two, preferably three, adjacent protrusions have the same length

2. Winding support (100) according to Claim 1, **characterized in that** the winding support (100) consists of an electrically insulating plastic and the protrusions (1, 2, 3, 4, 5, 6) are connected to one another in the form of a ring.

## Revendications

1. Support d'enroulement (100) pour recevoir au moins en partie une bobine de stator (300, 320, 330) d'un stator (500), le support d'enroulement (100) présentant une pluralité de membrures (1, 2, 3, 4, 5, 6) qui doivent être enfoncées dans une direction d'enfoncement (E) à chaque fois dans un espace intermédiaire (12, 23, 34, 45, 56, 61) qui est formé par deux dents polaires statoriques adjacentes (60, 10 ; 10, 20 ; 20, 30 ; 30, 40 ; 40, 50 ; 50, 60) d'un empilement de tôles (400) du stator (500), au moins l'une des membrures (1, 3, 5) dans la direction d'enfoncement (E) présentant une longueur différente de celle d'au moins l'une des autres membrures (2, 4, 6),
**caractérisé en ce qu'**au moins deux, de préférence trois membrures adjacentes présentent la même longueur.

2. Support d'enroulement (100) selon la revendication 1,
**caractérisé en ce que** le support d'enroulement (100) se compose d'un plastique électriquement isolant et les membrures (1, 2, 3, 4, 5, 6) sont connectées les unes aux autres sous forme annulaire.
